# EUROPEAN PATENT APPLICATION

(11) **EP 4 535 685 A1**
(43) Date of publication of application: **09.04.2025**
(21) Application number: 23815281.3
(22) Date of filing: 01.06.2023
(51) Int. Cl.: H04B 7/22

(54) **INFORMATION REPORTING METHOD AND APPARATUS, INFORMATION RECEIVING METHOD AND APPARATUS, TERMINAL AND NETWORK SIDE DEVICE**

(30) Priority: 01.06.2022 CN 202210623466
(71) Applicant: Vivo Mobile Communication Co., Ltd., Dongguan, Guangdong 523863 (CN)
(72) Inventor: TAN, Junjie, Dongguan, Guangdong 523863 (CN); LI, Dongru, Dongguan, Guangdong 523863 (CN); WU, Kai, Dongguan, Guangdong 523863 (CN)
(74) Representative: Shieldmark
(86) International application number: PCT/CN2023/097759
(87) International publication number: WO 2023/232104

(57) **Abstract**

This application discloses an information reporting method and apparatus, an information receiving method and apparatus, a terminal, and a network-side device, and pertains to the field of communication technologies. The information reporting method in embodiments of this application includes: receiving, by a terminal, a backscatter signal from a backscatter communication BSC device, determining first information based on the backscatter signal, and reporting the first information. The first information includes at least one of the following: content of the backscatter signal, first indication information, and information of a first event. The first indication information is used to indicate whether a target event occurs when the terminal receives the backscatter signal within first time, and the first event is a target event that occurs when the terminal receives the backscatter signal within the first time.

## Description

### CROSS-REFERENCE TO RELATED APPLICATIONS

This application claims priority to Chinese Patent Application No. 202210623466.1, filed in China on June 1, 2022, which is incorporated herein by reference in its entirety.

### TECHNICAL FIELD

This application pertains to the field of communication technologies, and specifically, relates to an information reporting method and apparatus, an information receiving method and apparatus, a terminal, and a network-side device.

### BACKGROUND

In a conventional radio frequency identification (Radio Frequency Identification, RFID) backscatter communication system, a backscatter communication (Backscatter Communication, BSC) device, for example, a tag (Tag), may modulate and load its own information by using an incident carrier signal, and then send the information to a reader for receiving, to implement communication. In a cellular network architecture, backscatter communication may be performed with assistance of a terminal. In this case, how to enable a network side to learn of information related to a backscatter signal of a BSC device is a problem that urgently needs to be resolved.

### SUMMARY

Embodiments of this application provide an information reporting method and apparatus, an information receiving method and apparatus, a terminal, and a network-side device, to resolve a problem about how to enable a network side to learn of information related to a backscatter signal of a BSC device.

According to a first aspect, an information reporting method is provided, including:
receiving, by a terminal, a backscatter signal from a backscatter communication BSC device;
determining, by the terminal, first information based on the backscatter signal, where the first information includes at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time; and
reporting, by the terminal, the first information.

According to a second aspect, an information receiving method is provided, including:
receiving, by a network-side device, first information from a terminal, where
the first information is determined based on a backscatter signal received from a BSC device, the first information includes at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time.

According to a third aspect, an information reporting apparatus is provided, applied to a terminal and including:
a first receiving module, configured to receive a backscatter signal from a BSC device;
a first determining module, configured to determine first information based on the backscatter signal, where the first information includes at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time; and
a reporting module, configured to report the first information.

According to a fourth aspect, an information receiving apparatus is provided, applied to a network-side device and including:
a third receiving module, configured to receive first information from a terminal, where
the first information is determined based on a backscatter signal received from a BSC device, the first information includes at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time.

According to a fifth aspect, a terminal is provided, where the terminal includes a processor and a memory, the memory stores a program or instructions capable of being executed by the processor, and when the program or instructions are executed by the processor, the steps of the method according to the first aspect are implemented.

According to a sixth aspect, a terminal is provided, including a processor and a communication interface. The communication interface is configured to receive a backscatter signal from a backscatter communication BSC device. The processor is configured to determine first information based on the backscatter signal, where the first information includes at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time. The communication interface is further configured to report the first information.

According to a seventh aspect, a network-side device is provided, where the network-side device includes a processor and a memory, the memory stores a program or instructions capable of being executed by the processor, and when the program or instructions are executed by the processor, the steps of the method according to the second aspect are implemented.

According to an eighth aspect, a network-side device is provided, including a processor and a communication interface. The communication interface is configured to receive first information from a terminal, where the first information is determined based on a backscatter signal received from a BSC device, the first information includes at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time.

According to a ninth aspect, a communication system is provided, including a terminal and a network-side device, where the terminal may be configured to perform the steps of the information reporting method according to the first aspect, and the network-side device may be configured to perform the steps of the information receiving method according to the second aspect.

According to a tenth aspect, a readable storage medium is provided, where the readable storage medium stores a program or instructions, and when the program or instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the steps of the method according to the first aspect, or implement the steps of the method according to the second aspect.

According to a twelfth aspect, a computer program or program product is provided, where the computer program or program product is stored in a storage medium, and the computer program or program product is executed by at least one processor to implement the steps of the method according to the first aspect, or implement the steps of the method according to the second aspect.

In the embodiments of this application, after receiving a backscatter signal from a BSC device, a terminal may determine first information based on the backscatter signal, and report the first information, where the first information includes at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time. In this way, the terminal can assist in reporting information related to the backscatter signal of the BSC device to a network side, so that the network side learns of the information related to the backscatter signal of the BSC device.

### BRIEF DESCRIPTION OF DRAWINGS

FIG. 1 is a block diagram of a wireless communication system to which embodiments of this application are applicable;
FIG. 2A, FIG. 2B, FIG. 2C, FIG. 2D, FIG. 2E, FIG. 2F, FIG. 2G, and FIG. 2H are schematic architectural diagrams of a backscatter communication system according to this application;
FIG. 3 is a flowchart of an information reporting method according to an embodiment of this application;
FIG. 4 is a schematic diagram of a reporting manner according to an embodiment of this application;
FIG. 5 is a schematic diagram of a reporting manner according to an embodiment of this application;
FIG. 6 is a schematic diagram of a reporting manner according to an embodiment of this application;
FIG. 7 is a flowchart of an information receiving method according to an embodiment of this application;
FIG. 8 is a schematic structural diagram of an information reporting apparatus according to an embodiment of this application;
FIG. 9 is a schematic structural diagram of an information receiving apparatus according to an embodiment of this application;
FIG. 10 is a schematic structural diagram of a communication device according to an embodiment of this application;
FIG. 11 is a schematic structural diagram of a terminal according to an embodiment of this application; and
FIG. 12 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Clearly, the described embodiments are some but not all of the embodiments of this application. All other embodiments obtained by persons of ordinary skill in the art based on the embodiments of this application fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not limit the number of objects. For example, there may be one or more first objects. In addition, in this specification and the claims, "and/or" indicates at least one of connected objects, and the character "/" generally indicates an "or" relationship between contextually associated objects.

It should be noted that technologies described in the embodiments of this application are not limited to a long term evolution (Long Term Evolution, LTE)/LTE-advanced (LTE-Advanced, LTE-A) system, and may also be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), NB-IoT, and other systems. The terms "system" and "network" in the embodiments of this application are often used interchangeably, and the technology described herein may be used in the aforementioned systems and radio technologies as well as other systems and radio technologies. In the following descriptions, a new radio (New Radio, NR) system is described for an illustration purpose, and NR terms are used in most of the following descriptions, but these technologies may also be applied to applications other than an NR system application, for example, a 6^{th} generation (6^{th} Generation, 6G) communication system.

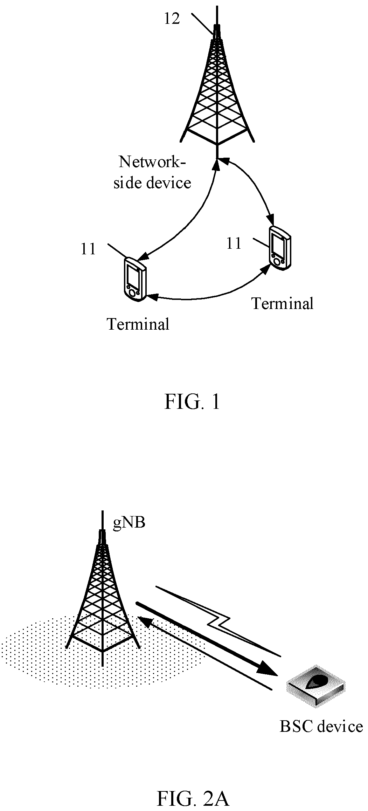

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The access network device 12 may include a base station, a wireless local area network (Wireless Local Area Network, WLAN) access point, a Wi-Fi node, or the like. The base station may be referred to as a NodeB, an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effect is achieved, the base station is not limited to a specific technical term. It should be noted that the base station in the NR system is used only as an example for description in the embodiments of this application, but a specific type of the base station is not limited.

For ease of understanding the embodiments of this application, the following content is first described.

Backscatter communication (Backscatter Communication, BSC) means that a backscatter communication device modulates a signal by using a radio frequency signal from another device or environment to transmit information of the backscatter communication device. Optionally, the backscatter communication device (which may be referred to as a BSC device) is, but not limited to, the following:
- a BSC device in conventional radio frequency identification (Radio Frequency Identification, RFID), where the BSC device is usually a tag (Tag) and is a passive internet of things (Internet of Things, IoT), namely, passive-IoT, device;
- a semi-passive (semi-passive) tag (Tag), where the tag has a specific amplification capability in downlink reception or uplink reflection; and
- a tag with an active sending capability (Active Tag), where the tag may send information to a reader (Reader) without depending on reflection of an incident signal.

A simple implementation of backscatter communication is as follows: When a tag needs to send '1', the tag reflects an incident carrier signal. When a tag needs to send '0', the tag does not perform reflection.

Optionally, a backscatter communication device may control a reflection factor of a circuit by adjusting internal impedance of the backscatter communication device, to change an amplitude, a frequency, a phase, or the like of an incident signal, so as to implement modulation of the signal. Corresponding amplitude modulation, frequency modulation, and/or phase modulation can be implemented by properly controlling the reflection factor.

In a cellular network, a backscatter communication system may specifically have eight architectures based on differences in RF radio frequency sources, uplink, and downlink, as shown in Table 1 and FIG. 2A to FIG. 2H.

**Table 1**

| Architecture | Downlink | Uplink | RF radio frequency source |
|---|---|---|---|
| 1 | Base station -> BSC device | BSC device -> base station | Base station |
| 2 | Base station -> BSC device | BSC device -> relay -> base station | Base station |
| 3-1a | Base station -> BSC device | BSC device -> UE -> base station | Base station |
| 3-1b | Base station -> BSC device | BSC device -> UE -> base station | UE |
| 3-2a | Base station -> UE -> BSC device | BSC device -> base station | Base station |
| 3-2b | Base station -> UE -> BSC device | BSC device -> base station | UE |
| 3-3a | Base station -> UE -> BSC device | BSC device -> UE -> base station | Base station |
| 3-3b | Base station -> UE -> BSC device | BSC device -> UE -> base station | UE |

In the architecture 1, as shown in FIG. 2A, the base station (for example, a gNB) is an RF radio frequency source, and is also a downlink transmit end (namely, a control command transmit end) of the BSC device and an uplink receive end (namely, a BSC receive end) of the BSC device. In this case, the base station directly communicates with the BSC device. This deployment architecture requires quite high reception sensitivity of the base station and the BSC device, but deployment is simple.

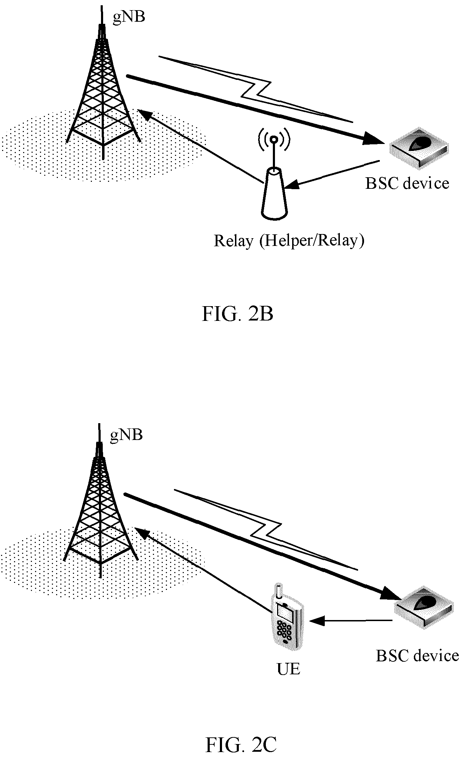

In the architecture 2, as shown in FIG. 2B, the base station (for example, a gNB) is an RF radio frequency source, but in this case, the relay (Helper/Relay) exists for performing relaying from the BSC device to uplink of the base station. In addition, the relay may also perform relaying from the base station to downlink of the BSC device.

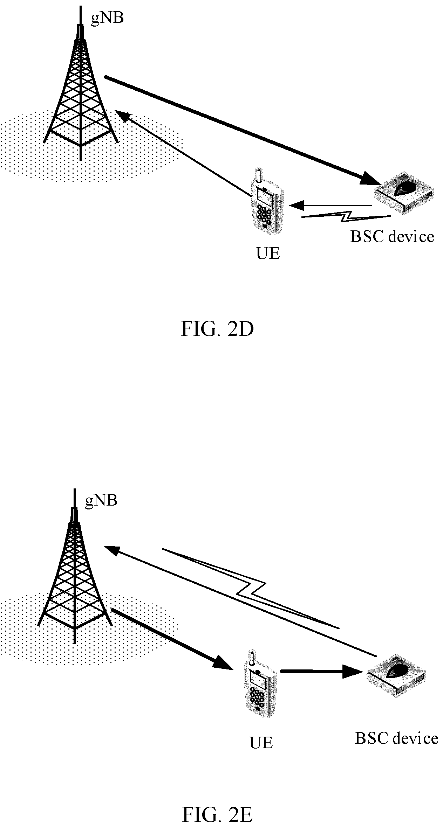

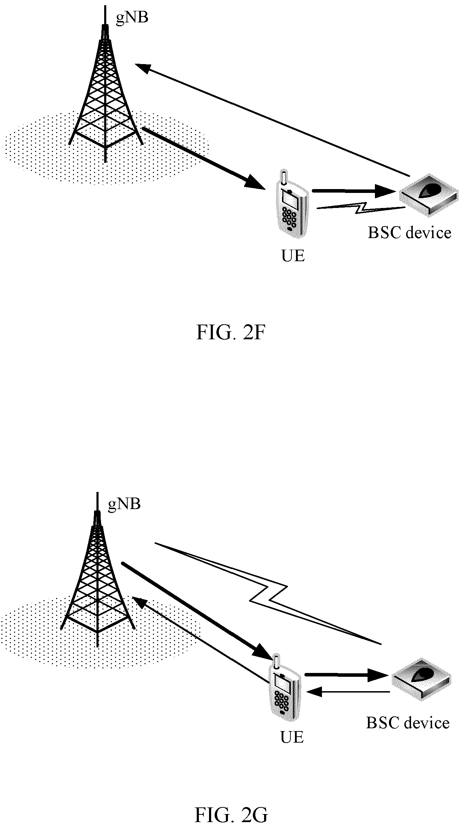

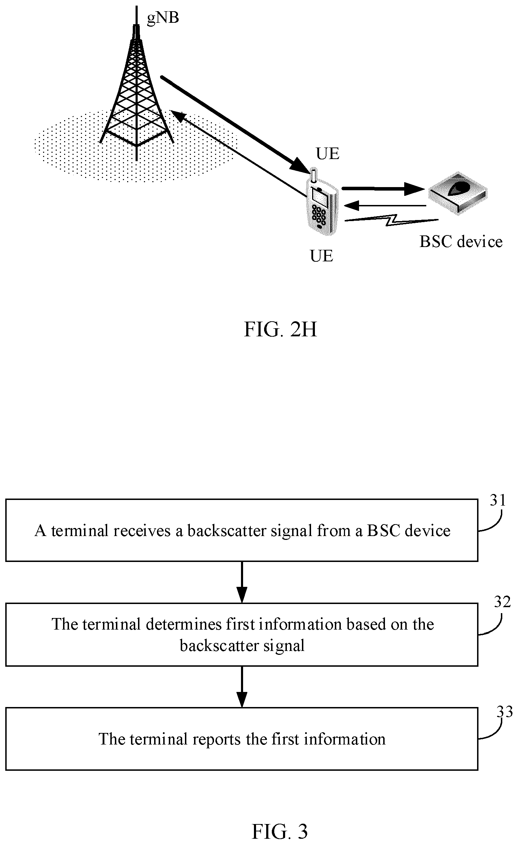

In an architecture 3, UE may serve as an RF radio frequency source, and perform forwarding from a BSC device to downlink and uplink of a base station. The architecture 3 may be divided into the following architectures:
- In the architecture 3-1a, as shown in FIG. 2C, the base station (for example, a gNB) is an RF radio frequency source. In downlink, the base station directly transmits downlink data to the BSC device. In uplink, the BSC device first sends a backscatter signal to the UE, and then the UE forwards the backscatter signal to the base station.
- In the architecture 3-1b, as shown in FIG. 2D, the UE is an RF radio frequency source. In downlink, the base station (for example, a gNB) directly transmits downlink data to the BSC device. In uplink, the BSC device first sends a backscatter signal to the UE, and then the UE forwards the backscatter signal to the base station.
- In the architecture 3-2a, as shown in FIG. 2E, the base station (for example, a gNB) is an RF radio frequency source. In downlink, the base station first sends downlink data to the UE, and then the UE forwards the downlink data to the BSC device. In uplink, the BSC device directly sends a backscatter signal to the base station.
- In the architecture 3-2b, as shown in FIG. 2F, the UE is an RF radio frequency source. In downlink, the base station (for example, a gNB) first sends downlink data to the UE, and then the UE forwards the downlink data to the BSC device. In uplink, the BSC device directly sends a backscatter signal to the base station.
- In the architecture 3-3a, as shown in FIG. 2G, the base station (for example, a gNB) is an RF radio frequency source. In downlink, the base station first sends downlink data to the UE, and then the UE forwards the downlink data to the BSC device. In uplink, the BSC device first sends a backscatter signal to the UE, and then the UE forwards the backscatter signal to the base station.
- In the architecture 3-3b, as shown in FIG. 2H, the UE is an RF radio frequency source. In downlink, the base station (for example, a gNB) first sends downlink data to the UE, and then the UE forwards the downlink data to the BSC device. In uplink, the BSC device first sends a backscatter signal to the UE, and then the UE forwards the backscatter signal to the base station.

It should be noted that, in FIG. 2A to FIG. 2H, a thick arrow indicates downlink, a thin arrow indicates uplink, and a lightning bolt symbol indicates an RF radio frequency. The embodiments of this application are mainly applicable to four architectures: 3-1a, 3-1b, 3-3a, and 3-3b. To be specific, UE assists in uplink communication of a BSC device that performs reporting to a network.

The following describes in detail an information reporting method and apparatus, an information receiving method and apparatus, a terminal, and a network-side device provided in the embodiments of this application with reference to the accompanying drawings and by using some embodiments and application scenarios thereof.

FIG. 3 is a flowchart of an information reporting method according to an embodiment of this application. The method is performed by a terminal. As shown in FIG. 3, the method includes the following steps.

Step 31: The terminal receives a backscatter signal from a BSC device.

In this embodiment, optionally, the BSC device is, but not limited to, a conventional RFID tag, a semi-passive tag, a tag with an active sending capability, passive-IoT UE, semi-passive-IoT UE, active-IoT UE, or the like. The BSC device may modulate and load its own information by using an incident carrier signal, and then send a backscatter signal to implement communication.

In some embodiments, the terminal may receive backscatter signal(s) from one or more BSC devices.

Step 32: The terminal determines first information based on the backscatter signal.

In this embodiment, the first information may include at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time. The first time may be a pre-agreed-upon or pre-configured period of time. This is not limited. For example, the first time is an inventory round corresponding to the BSC device.

Optionally, the content of the backscatter signal may include at least one of the following: control information of the BSC device and data information of the BSC device. The control information is, for example, a temporary identity (for example, a random number (Random Number, RN), a radio network temporary identity (Radio Network Temporary Identity, RNTI), a device ID, a session ID, an application ID, a user ID, a physical layer address, a data link layer address, a network layer address, an internet protocol (Internet Protocol, IP) address, media access control (Media Access Control, MAC) address, or the like) of the BSC device, acknowledgement (Acknowledgement, ACK)/negative acknowledgement (Negative Acknowledgement, NACK) information indicating whether the BSC device successfully receives information sent by a network, an error code, or the number of inventory rounds. The data information is, for example, a protocol-control word (Protocol-Control word, PC), an extended protocol-control word (Extended Protocol-Control word, XPC), an electronic product code (Electronic Product Code, EPC), information in a memory of the BSC device, or a sensing result (for example, temperature, humidity, altitude, or brightness) of a sensor.

Optionally, there may be one or more target events, which may include, but are not limited to, at least one of the following:
verification on the received backscatter signal fails, where the verification is, for example, cyclic redundancy check (Cyclic Redundancy Check, CRC);
no BSC device responds; or
collision occurs due to simultaneous response by a plurality of BSC devices.

In some embodiments, the first indication information may include at least one bit, and each bit corresponds to one target event, and may have a value of 0 or 1. If a target event occurs when the terminal receives the backscatter signal within the first time, a value of a bit corresponding to the target event is 1; otherwise, a value is 0. For example, if the target event "verification on the received backscatter signal fails" occurs, a value of a bit corresponding to the target event "verification on the received backscatter signal fails" in the first indication information is 1; otherwise, a value is 0.

In some embodiments, the terminal may record and count a target event (namely, the first event) that occurs upon reception of the backscatter signal from the BSC device within an agreed-upon period of time (for example, an inventory round). If the first event is that verification on the received backscatter signal fails, the information of the first event may include a BSC device backscatter signal that fails the verification (for example, CRC verification), the number of BSC device backscatter signals that fail the verification, and the like. If the first event is that no BSC device responds, the information of the first event may include a slot in which no BSC device responds, the number of slots, and the like. If the first event is that collision occurs due to simultaneous response by a plurality of BSC devices, the information of the first event may include a slot in which collision occurs due to simultaneous response by a plurality of BSC devices, the number of slots, and the like.

Step 33: The terminal reports the first information.

In some embodiments, the terminal may report the first information to a network-side device, for example, a base station. In this way, the terminal assists in reporting the backscatter signal of the BSC device to the network.

According to the information reporting method in this embodiment of this application, after receiving the backscatter signal from the BSC device, the terminal may determine the first information based on the backscatter signal, and report the first information, where the first information includes at least one of the following: the content of the backscatter signal, the first indication information, and the information of the first event, the first indication information is used to indicate whether a target event occurs when the terminal receives the backscatter signal within the first time, and the first event is a target event that occurs when the terminal receives the backscatter signal within the first time. In this way, the terminal can assist in reporting information related to the backscatter signal of the BSC device to a network side, so that the network side learns of the information related to the backscatter signal of the BSC device. Further, a plurality of types of reported content included in the first information can flexibly adapt to backscatter communication requirements in different scenarios.

In this embodiment of this application, the first information may be associated with backscatter signal(s) of one or more BSC devices. For example, it may be pre-agreed-upon or preconfigured that the first information is associated with backscatter signal(s) of one or more BSC devices.

Optionally, when the terminal does not receive a backscatter signal from a first BSC device, the terminal may pad pre-agreed-upon information, for example, "0", to a first field of the first information, where the first field is used to carry information related to the backscatter signal of the first BSC device. To be specific, if the first information is associated with backscatter signals of a plurality of BSC devices but the terminal fails to receive backscatter signals of some BSC devices, the terminal may pad pre-agreed-upon information, for example, "0", to corresponding fields of the first information.

In this embodiment of this application, the first information may carry the content of the backscatter signal of the BSC device in a plurality of data formats, and the content of the backscatter signal that is carried in the first information may include, but is not be limited to, at least one of the following:

A raw signal waveform of the backscatter signal. In this way, raw content of the signal can be reported.

First content, where the first content is content obtained by decoding the backscatter signal. For example, the first information carries complete content obtained by decoding the backscatter signal. In this way, decoded raw content of the signal can be reported.

Second content, where the second content is content obtained by integrating the first content, and the first content is content obtained by decoding the backscatter signal. For example, the first information carries integrated content obtained by decoding the backscatter signal.

In this way, the backscatter signal can be flexibly and efficiently reported to the network based on a plurality of data formats of the first information, to be specific, the raw content, the decoded content, and/or the integrated content that are carried in the first information.

Optionally, the second content may include at least one of the following:

A first data frame, where the first data frame carries the data information of the BSC device. To be specific, data information of one or more BSC devices is integrated into one data frame.

A second data frame, where the second data frame carries the control information of the BSC device. To be specific, control information of one or more BSC devices is integrated into one data frame. In this case, some control information that does not need to be completely reported may be converted into shorter pre-agreed-upon indication information. For example, one bit is used to indicate an ACK/NACK.

In this embodiment of this application, when the terminal reports the first information, the first information may be carried in a physical uplink shared channel (Physical Uplink Shared Channel, PUSCH) and/or a physical uplink control channel (Physical Uplink Control Channel, PUCCH), so that the first information is reported through the PUSCH and/or the PUCCH.

Optionally, when the first information is carried in the PUSCH and/or the PUCCH, the terminal may map the first information to the PUSCH or the PUCCH in at least one of the following manners:
(1) The terminal generates an application layer data frame including the first information, processes the data frame at an L3 network layer and an L2 data link layer, and then maps a processed data frame to the PUSCH at an L1 physical layer.
(2) The terminal generates an L3 network layer data frame including the first information, processes the data frame at an L2 data link layer, and then maps a processed data frame to the PUSCH at an L1 physical layer.
(3) The terminal generates an L2 data link layer data frame including the first information, and maps the data frame to the PUSCH at an L1 physical layer.
(4) The terminal generates an L1 physical layer data frame including the first information, and uses the PUSCH to carry the data frame.
(5) The terminal generates an L1 physical layer data frame including the first information, and uses the PUCCH to carry the data frame.

Optionally, the data frame in (1) to (5) may have a fixed length or a variable length. This is determined according to an actual requirement and is not limited.

Optionally, when the data frame has a variable length, the terminal may explicitly or implicitly indicate a length of the data frame with a variable frame length to the network-side device, so that the network-side device learns of the length of the data frame. The terminal may send second indication information to the network-side device, where the second indication information is used to explicitly indicate the length of the data frame; and/or the terminal may send third indication information to the network-side device, where the third indication information is used to implicitly indicate the length of the data frame.

In some embodiments, the second indication information includes information carried in a second field of the data frame. To be specific, the terminal explicitly indicates the length of the data frame by using a field at a fixed position in the data frame. The second field may be preset.

In some other embodiments, the third indication information includes separators inserted at the start and the end of the data frame. To be specific, the terminal implicitly indicates the length of the data frame by using the separators inserted at the start and the end of the data frame. The separator is, for example, data with a fixed pattern, for example, 111 or 011.

In this embodiment of this application, a configuration of the first information, to be specific, specific configurations such as content included in the first information, a data format, the number of associated BSC device backscatter signals, a mapping method to the physical channels, and PUSCH/PUCCH resources, may be determined based on at least one of the following:
a pre-agreed-upon configuration;
a default configuration;
an indication by the network-side device; or
selection by the terminal, where for example, the terminal autonomously selects a group of configurations of the first information, and indicates the configurations to the network-side device by using radio resource control (Radio Resource Control, RRC) signaling, uplink control information (Uplink Control Information, UCI), or the like.

Optionally, when the configuration of the first information is determined based on the indication by the network-side device, the terminal may receive fourth indication information from the network-side device, where the fourth indication information is used to indicate the configuration of the first information, to be specific, explicitly indicate the configuration of the first information; and/or the terminal may monitor the control information sent by the network-side device to the BSC device, and determine the configuration of the first information based on the control information, to be specific, the network implicitly indicates the configuration of the first information by using the control information sent to the BSC device.

In some embodiments, the fourth indication information includes, but is not limited to, RRC signaling, a media access control control element (Media Access Control Control Element, MAC CE), downlink control information (Downlink Control Information, DCI), and the like.

Optionally, a specific parameter configuration of the first information reported by the terminal to the network may be determined in the following manners:
Manner 1: A default configuration is pre-agreed upon, including reported content, a data format, the number of associated BSC device backscatter signals, a physical channel mapping mode, a physical channel resource, and the like.
Manner 2: A plurality of group of configurations are pre-agreed upon, and each group of configurations includes corresponding reported content, a data format, the number of associated BSC device backscatter signals, a physical channel mapping mode, a physical channel resource, and the like. In this case:
   2a: The network-side device indicates, by using RRC signaling, a MAC CE, DCI, or the like, the terminal to select a configuration from the plurality of groups of configurations.
   2b: The terminal selects a group of configurations from the plurality of groups of configurations based on characteristics (for example, a length, a priority, or a delay requirement) and/or content of the backscatter signal of the BSC device, and indicates the configurations to the network-side device by using RRC signaling or UCI.
   2c: The terminal determines a group of configurations from the plurality of groups of configurations based on a control command sent by the network-side device to the BSC device, and indicates the configurations to the network-side device by using RRC signaling or UCI.
Manner 3: The network-side device indicates a plurality of groups of configurations to the terminal by using RRC signaling, and each group of configurations includes corresponding reported content, a data format, the number of associated BSC device backscatter signals, a physical channel mapping mode, a physical channel resource, and the like. In this case:
   3a: The network-side device indicates, by using RRC signaling, a MAC CE, DCI, or the like, the terminal to select a configuration from the plurality of groups of configurations.
   3b: The terminal selects a group of configurations from the plurality of groups of configurations based on characteristics (for example, a length, a priority, or a delay requirement) and/or content of the backscatter signal of the BSC device, and indicates the configurations to the network-side device by using RRC signaling or UCI.
   3c: The terminal determines a group of configurations from the plurality of groups of configurations based on a control command sent by the network-side device to the BSC device, and indicates the configurations to the network-side device by using RRC signaling or UCI.
Manner 4: The network-side device directly indicates a group of configurations to the terminal by using RRC signaling, where the configurations include reported content, a data format, the number of associated BSC device backscatter signals, a physical channel mapping mode, a physical channel resource, and the like.

The following describes this application in detail with reference to specific embodiments.

### Embodiment 1

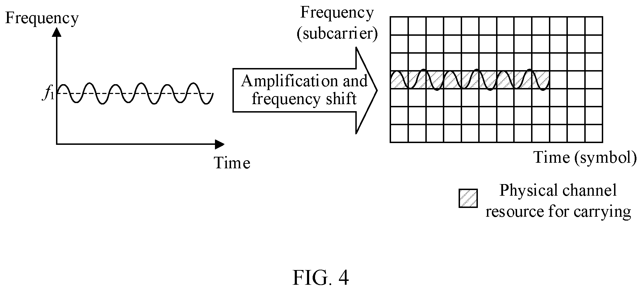

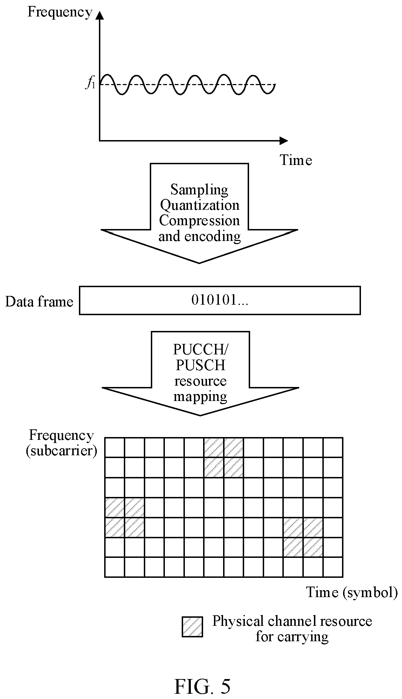

In Embodiment 1, it is assumed that a terminal reports a raw signal waveform of a backscatter signal of a BSC device to a base station. It is assumed that the terminal or the base station sends a control command and a single-frequency carrier to the BSC device. After receiving the control command, the BSC device modulates its own information by using the single-frequency carrier, and backscatters modulated information, where a frequency of the backscatter signal of the BSC device is f1. The terminal may report the backscatter signal of the BSC device by using the following methods:
Method 1: As shown in FIG. 4, the terminal monitors a signal at the frequency f1, and directly amplifies a received signal and frequency-shifts an amplified signal to a specific subcarrier (subcarrier) frequency of a previously determined physical channel. Optionally, if a length of the backscatter signal of the BSC device does not match a time domain length of a physical channel resource, an agreed-upon signal waveform may be padded, the backscatter signal of the BSC device may be pruned, or the physical channel resource may be switched.
Method 2: As shown in FIG. 5, the terminal monitors a signal at the frequency f1, samples and quantizes a detected signal, generates one of an application layer data frame, a network layer data frame, a data link layer data frame, and a physical layer data frame based on a determined configuration, for example, obtains a data frame 010101..., and then maps the data frame to a PUSCH/PUCCH resource to send the data frame to the base station. Optionally, the terminal may compress and encode quantized data.

Compared with the method 1, in the method 2, no continuous time-domain physical channel resources are required for carrying data, and the number of used physical channel resources can also be reduced, so that flexibility can be improved and overheads can be reduced.

### Embodiment 2

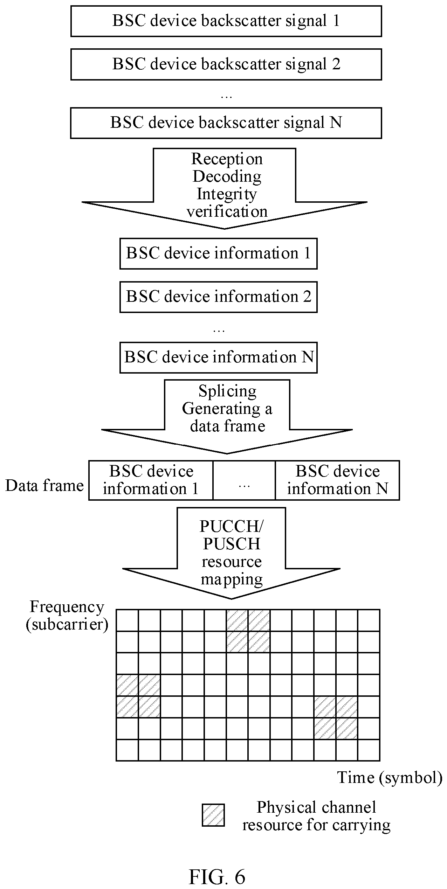

In Embodiment 2, it is assumed that a terminal reports decoded complete content of a backscatter signal of a BSC device to a base station. As shown in FIG. 6, the terminal may report the backscatter signal of the BSC device through the following process:
S1: The terminal decodes a received backscatter signal of a BSC device. For example, the terminal may receive backscatter signals of N BSC devices, and decode and check integrity of a backscatter signal 1, a backscatter signal 2, ..., and a backscatter signal N that are received to obtain BSC device information 1, BSC device information 2, ..., and BSC device information N respectively.
S2: The terminal splices decoded content based on a determined configuration to generate one of an application layer data frame, a network layer data frame, a data link layer data frame, and a physical layer data frame, where the data frame includes the BSC device information 1, the BSC device information 2, ..., and the BSC device information N; and then maps the data frame to a PUSCH/PUCCH resource to send the data frame to the base station.

Optionally, the terminal verifies integrity of decoded data and discards information that fails the verification.

Optionally, a data frame may be associated with more than one BSC device backscatter signal. In this case, the terminal needs to cache a plurality of BSC device backscatter signals and splice the backscatter signals in a data frame.

Optionally, if a data frame includes more than one BSC device backscatter signal, adjacent BSC device backscatter signals may be separated by agreed-upon information bits.

### Embodiment 3

In Embodiment 3, it is assumed that a terminal reports decoded integrated content of a backscatter signal of a BSC device to a base station. Specifically, the terminal may report the backscatter signal of the BSC device by using the following method:
S1: The terminal decodes a received backscatter signal of a BSC device.
S2: The terminal verifies integrity of decoded data and discards information that fails the verification.
S3: The terminal performs at least one of the following operations on content that passes the integrity verification:
   (a) Control information integration
      i: Convert control information in an agreed-upon manner, for example, convert a temporary identity of the BSC device into a network BSC device identifier ID, or convert ACK/NACK information into one-bit information.
      ii: Combine control information of one or more BSC devices, for example, represent a plurality of pieces of identical control information as "control information"+"quantity", or represent control information of a plurality of BSC devices as "BSC device ID"+"control information".
   (b) Data information integration
      i: Convert data information in an agreed-upon manner, for example, convert an electronic product code EPC into an agreed-upon item identifier Item ID.
      ii: Combine data information of one or more BSC devices, for example, represent a plurality of pieces of identical data information as "data information"+"quantity", or represent data information of a plurality of BSC devices as "BSC device ID"+"data information".
S4: The terminal re-generates one of an application layer data frame, a network layer data frame, a data link layer data frame, and a physical layer data frame based on integrated information and a determined configuration, and then maps the data frame to a PUSCH/PUCCH resource to send the data frame to the base station.

### Embodiment 4

In Embodiment 4, it is assumed that the terminal reports, to a base station, an event that occurs when the terminal receives a backscatter signal of a BSC device. Specifically, the terminal may perform reporting by using the following method.

S1: The terminal counts events that occur when the terminal receives BSC device backscatter signals within an agreed-upon period of time (for example, an inventory round), for example:
(a) a BSC device backscatter signal that fails CRC verification, and the number of BSC device backscatter signals that fail the CRC verification;
(b) a slot in which no BSC device responds, and the number of slots; or
(c) a slot in which collision occurs due to simultaneous response by a plurality of BSC devices, and the number of slots.

S2: The terminal integrates the events, for example, integrates the event (a) into a form of "the number of BSC device backscatter signals that fail the CRC verification"+"BSC device backscatter signal 1"+..."BSC device backscatter signal N".

S3: The terminal re-generates one of an application layer data frame, a network layer data frame, a data link layer data frame, or a physical layer data frame based on integrated event information and a determined configuration, and then uses a PUSCH/PUCCH to carry the data frame to send the data frame to the base station.

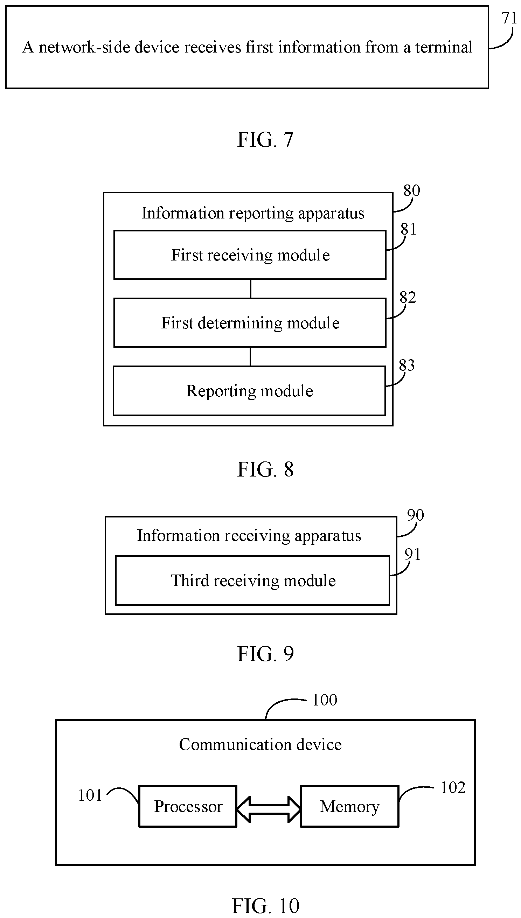

FIG. 7 is a flowchart of an information receiving method according to an embodiment of this application. The method is performed by a network-side device. As shown in FIG. 7, the method includes the following steps.

Step 71: The network-side device receives first information from a terminal.

In this embodiment, the first information is determined based on a backscatter signal received from the BSC device. The first information may include at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time. The first time may be a pre-agreed-upon or pre-configured period of time. This is not limited. For example, the first time is an inventory round corresponding to the BSC device. In this way, a network side can learn of, based on the first information, information related to the backscatter signal of the BSC device.

Optionally, the content of the backscatter signal may include at least one of the following: control information of the BSC device and data information of the BSC device. The control information is, for example, a temporary identity of the BSC device, acknowledgement/negative acknowledgement (ACK/NACK) information indicating whether the BSC device successfully receives information sent by a network, an error code, or the number of inventory rounds. The data information is, for example, a protocol-control word (Protocol-Control word, PC), an extended protocol-control word (Extended Protocol-Control word, XPC), an electronic product code (Electronic Product Code, EPC), information in a memory of the BSC device, or a sensing result (for example, temperature, humidity, altitude, or brightness) of a sensor.

Optionally, there may be one or more target events, which may include, but are not limited to, at least one of the following:
verification on the received backscatter signal fails, where the verification is, for example, cyclic redundancy check (Cyclic Redundancy Check, CRC);
no BSC device responds; or
collision occurs due to simultaneous response by a plurality of BSC devices.

In some embodiments, the first indication information may include at least one bit, and each bit corresponds to one target event, and may have a value of 0 or 1. If a target event occurs when the terminal receives the backscatter signal within the first time, a value of a bit corresponding to the target event is 1; otherwise, a value is 0. For example, if the target event "verification on the received backscatter signal fails" occurs, a value of a bit corresponding to the target event "verification on the received backscatter signal fails" in the first indication information is 1; otherwise, a value is 0.

In some embodiments, the terminal may record and count a target event (namely, the first event) that occurs upon reception of the backscatter signal from the BSC device within an agreed-upon period of time (for example, an inventory round). If the first event is that verification on the received backscatter signal fails, the information of the first event may include a BSC device backscatter signal that fails the verification (for example, CRC verification), the number of BSC device backscatter signals that fail the verification, and the like. If the first event is that no BSC device responds, the information of the first event may include a slot in which no BSC device responds, the number of slots, and the like. If the first event is that collision occurs due to simultaneous response by a plurality of BSC devices, the information of the first event may include a slot in which collision occurs due to simultaneous response by a plurality of BSC devices, the number of slots, and the like.

Optionally, the first information may be associated with backscatter signal(s) of one or more BSC devices. For example, it may be pre-agreed-upon or preconfigured that the first information is associated with backscatter signal(s) of one or more BSC devices.

Optionally, when the terminal does not receive a backscatter signal from a first BSC device, pre-agreed-upon information, for example, "0", is carried in a first field of the first information, where the first field is used to carry information related to the backscatter signal of the first BSC device.

Optionally, the first information may be carried in a PUSCH and/or a PUCCH.

Optionally, the receiving first information may include at least one of the following:
the network-side device monitors the PUSCH to obtain an L1 physical layer data frame, processes the L1 physical layer data frame at an L2 data link layer and an L3 network layer to generate an application layer data frame, and obtains the first information from the application layer data frame;
the network-side device monitors the PUSCH to obtain an L1 physical layer data frame, processes the L1 physical layer data frame at an L2 data link layer to generate an L3 network layer data frame, and obtains the first information from the L3 network layer data frame;
the network-side device monitors the PUSCH to obtain an L1 physical layer data frame, obtains an L2 data link layer data frame based on the L1 physical layer data frame, and obtains the first information from the L2 data link layer data frame;
the network-side device monitors the PUSCH to obtain an L1 physical layer data frame, and obtains the first information from the L1 physical layer data frame; or
the network-side device monitors the PUCCH to obtain an L1 physical layer data frame, and obtains the first information from the L1 physical layer data frame.

Optionally, the data frame has a fixed length, or the data frame has a variable length.

Optionally, when the data frame has a variable length, the network-side device may receive second indication information from the terminal, where the second indication information is used to explicitly indicate a length of the data frame; and/or the network-side device may receive third indication information from the terminal, where the third indication information is used to implicitly indicate a length of the data frame.

In some embodiments, the second indication information includes information carried in a second field of the data frame. To be specific, the terminal explicitly indicates the length of the data frame by using a field at a fixed position in the data frame. The second field may be preset.

In some other embodiments, the third indication information includes separators inserted at the start and the end of the data frame. To be specific, the terminal implicitly indicates the length of the data frame by using the separators inserted at the start and the end of the data frame. The separator is, for example, data with a fixed pattern, for example, 111 or 011.

Optionally, when the configuration of the first information is determined based on the indication by the network-side device, the network-side device may send fourth indication information to the terminal, where the fourth indication information is used to indicate the configuration of the first information, to be specific, explicitly indicate the configuration of the first information; and/or the network-side device may send control information to the BSC device, where the control information is used for the terminal to determine the configuration of the first information based on the control information after detecting the control information, to be specific, the network implicitly indicates the configuration of the first information by using the control information sent to the BSC device.

In some embodiments, the fourth indication information includes, but is not limited to, RRC signaling, a MAC CE, DCI, and the like.

The information reporting method provided in the embodiments of this application may be performed by an information reporting apparatus. In the embodiments of this application, an information reporting apparatus provided in the embodiments of this application is described by using an example in which the information reporting apparatus performs the information reporting method.

FIG. 8 is a schematic structural diagram of an information reporting apparatus according to an embodiment of this application. The apparatus is applied to a terminal. As shown in FIG. 8, the information reporting apparatus 80 includes:
a first receiving module 81, configured to receive a backscatter signal from a BSC device;
a first determining module 82, configured to determine first information based on the backscatter signal, where the first information includes at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time; and
a reporting module 83, configured to report the first information.

Optionally, the content of the backscatter signal includes at least one of the following: control information of the BSC device and data information of the BSC device.

Optionally, the content of the backscatter signal includes at least one of the following:
a raw signal waveform, first content, and second content of the backscatter signal, where
the first content is content obtained by decoding the backscatter signal, and the second content is content obtained by integrating the first content.

Optionally, the second content includes at least one of the following:
a first data frame, where the first data frame carries the data information of the BSC device; and
a second data frame, where the second data frame carries the control information of the BSC device.

Optionally, the target event includes at least one of the following:
verification on the received backscatter signal fails;
no BSC device responds; or
collision occurs due to simultaneous response by a plurality of BSC devices.

Optionally, the first information is associated with backscatter signal(s) of one or more BSC devices.

Optionally, when the terminal does not receive a backscatter signal from a first BSC device, the information reporting apparatus 80 further includes:
a filling module, configured to pad pre-agreed-upon information to a first field of the first information, where the first field is used to carry information related to the backscatter signal of the first BSC device.

Optionally, the first information is carried in a PUSCH and/or a PUCCH.

Optionally, the information reporting apparatus 80 further includes:
an execution module, configured to perform at least one of the following:
generating an application layer data frame including the first information, processing the data frame at an L3 network layer and an L2 data link layer, and then mapping a processed data frame to the PUSCH at an L1 physical layer;
generating an L3 network layer data frame including the first information, processing the data frame at an L2 data link layer, and then mapping a processed data frame to the PUSCH at an L1 physical layer;
generating an L2 data link layer data frame including the first information, and mapping the data frame to the PUSCH at an L1 physical layer;
generating an L1 physical layer data frame including the first information, and using the PUSCH to carry the data frame; or
generating an L1 physical layer data frame including the first information, and using the PUCCH to carry the data frame.

Optionally, the data frame has a fixed length, or the data frame has a variable length.

Optionally, when the data frame has a variable length, the information reporting apparatus 80 further includes:
a first sending module, configured to perform at least one of the following:
sending second indication information to a network-side device, where the second indication information is used to explicitly indicate a length of the data frame; or
sending third indication information to the network-side device, where the third indication information is used to implicitly indicate a length of the data frame.

Optionally, the second indication information includes information carried in a second field of the data frame; and
the third indication information includes separators inserted at the start and the end of the data frame.

Optionally, a configuration of the first information is determined based on at least one of the following:
a pre-agreed-upon configuration;
a default configuration;
an indication by the network-side device; or
selection by the terminal.

Optionally, the information reporting apparatus 80 further includes:
a second receiving module, configured to receive fourth indication information from the network-side device, where the fourth indication information is used to indicate the configuration of the first information; and
a monitoring module, configured to monitor control information sent by the network-side device to the BSC device, and determine the configuration of the first information based on the control information.

The information reporting apparatus 80 in this embodiment of this application may be an electronic device, for example, an electronic device with an operating system; or may be a component in an electronic device, for example, an integrated circuit or a chip. The electronic device may be a terminal or another device other than the terminal. For example, the terminal may include but is not limited to the aforementioned types of the terminal 11, and the another device may be a server, a network attached storage (Network Attached Storage, NAS), or the like. This is not specifically limited in the embodiments of this application.

The information reporting apparatus 80 provided in this embodiment of this application is capable of implementing the processes implemented in the method embodiment shown in FIG. 3, with the same technical effect achieved. To avoid repetition, details are not described herein again.

FIG. 9 is a schematic structural diagram of an information receiving apparatus according to an embodiment of this application. The apparatus is applied to a network-side device. As shown in FIG. 9, the information receiving apparatus 90 includes:
a third receiving module 91, configured to receive first information from a terminal, where
the first information is determined based on a backscatter signal received from a BSC device, the first information includes at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time.

Optionally, the first information is carried in a PUSCH and/or a PUCCH.

Optionally, the third receiving module 91 is specifically configured to perform at least one of the following:
monitoring the PUSCH to obtain an L1 physical layer data frame, processing the L1 physical layer data frame at an L2 data link layer and an L3 network layer to generate an application layer data frame, and obtaining the first information from the application layer data frame;
monitoring the PUSCH to obtain an L1 physical layer data frame, processing the L1 physical layer data frame at an L2 data link layer to generate an L3 network layer data frame, and obtaining the first information from the L3 network layer data frame;
monitoring the PUSCH to obtain an L1 physical layer data frame, obtaining an L2 data link layer data frame based on the L1 physical layer data frame, and obtaining the first information from the L2 data link layer data frame;
monitoring the PUSCH to obtain an L1 physical layer data frame, and obtaining the first information from the L1 physical layer data frame; or
monitoring the PUCCH to obtain an L1 physical layer data frame, and obtaining the first information from the L1 physical layer data frame.

Optionally, the data frame has a fixed length, or the data frame has a variable length.

Optionally, when the data frame has a variable length, the information receiving apparatus 90 further includes:
a fourth receiving module, configured to perform at least one of the following:
receiving second indication information from the terminal, where the second indication information is used to explicitly indicate a length of the data frame; or
receiving third indication information from the terminal, where the third indication information is used to implicitly indicate a length of the data frame.

Optionally, the second indication information includes information carried in a second field of the data frame; and
the third indication information includes separators inserted at the start and the end of the data frame.

Optionally, the information receiving apparatus 90 further includes:
a second sending module, configured to perform at least one of the following:
sending fourth indication information to the terminal, where the fourth indication information is used to indicate a configuration of the first information; and
sending control information to the BSC device, where the control information is used for the terminal to determine the configuration of the first information based on the control information after detecting the control information.

The information receiving apparatus 90 provided in this embodiment of this application is capable of implementing the processes implemented in the method embodiment shown in FIG. 7, with the same technical effect achieved. To avoid repetition, details are not described herein again.

Optionally, as shown in FIG. 10, an embodiment of this application further provides a communication device 100, including a processor 101 and a memory 102. The memory 102 stores a program or instructions capable of being executed by the processor 101. For example, in a case that the communication device 100 is a terminal, when the program or instructions are executed by the processor 101, the steps in the embodiment of the information reporting method shown in FIG. 3 are implemented, with the same technical effect achieved. In a case that the communication device 100 is a network-side device, when the program or instructions are executed by the processor 101, the steps in the embodiment of the information receiving method shown in FIG. 7 are implemented, with the same technical effect achieved. To avoid repetition, details are not described herein again.

An embodiment of this application further provides a terminal, including a processor and a communication interface. The communication interface is configured to receive a backscatter signal from a backscatter communication BSC device. The processor is configured to determine first information based on the backscatter signal, where the first information includes at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time. The communication interface is further configured to report the first information. The terminal embodiment corresponds to the foregoing terminal-side method embodiment, and all implementation processes and implementations of the foregoing method embodiment are applicable to the terminal embodiment, with the same technical effect achieved.

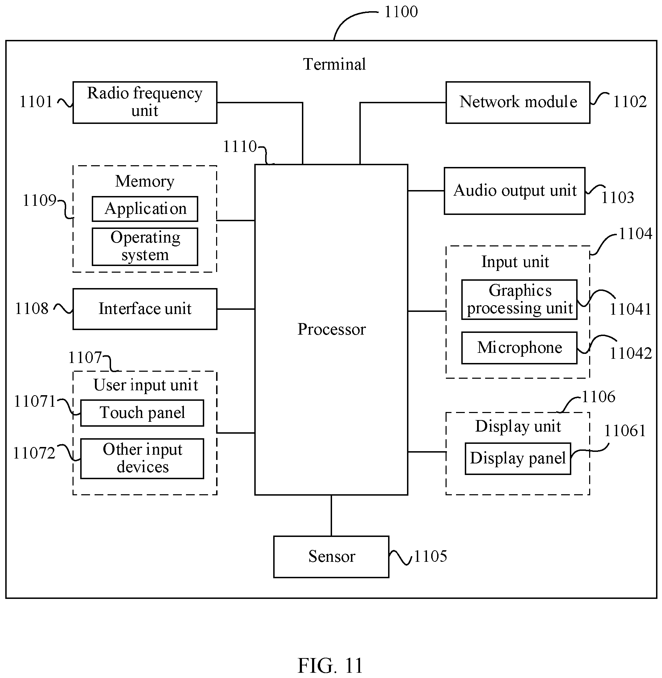

Specifically, FIG. 11 is a schematic diagram of a hardware structure of a terminal for implementing the embodiments of this application.

The terminal 1100 includes but is not limited to at least some of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the terminal 1100 may further include a power supply (for example, a battery) that supplies power to each component. The power supply may be logically connected to the processor 1110 through a power management system, so that functions such as charging management, discharging management, and power consumption management are implemented through the power management system. The terminal structure shown in FIG. 11 does not constitute a limitation on the terminal. The terminal may include more or fewer components than those shown in the figure, or some components may be combined, or different component arrangements may be used. Details are not described herein again.

It should be understood that, in this embodiment of this application, the input unit 1104 may include a graphics processing unit (Graphics Processing Unit, GPU) 11041 and a microphone 11042. The graphics processing unit 11041 processes image data of a static picture or a video that is obtained by an image capture apparatus (for example, a camera) in a video capture mode or an image capture mode. The display unit 1106 may include a display panel 11061. The display panel 11061 may be configured in a form of a liquid crystal display, an organic light-emitting diode, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function button (such as a volume control button or an on/off button), a trackball, a mouse, and a joystick. Details are not described herein.

In this embodiment of this application, after receiving downlink data from a network-side device, the radio frequency unit 1101 may transmit the downlink data to the processor 1110 for processing. In addition, the radio frequency unit 1101 may send uplink data to the network-side device. Usually, the radio frequency unit 1101 includes but is not limited to an antenna, an amplifier, a transceiver, a coupler, a low noise amplifier, a duplexer, and the like.

The memory 1109 may be configured to store software programs or instructions and various data. The memory 1109 may mainly include a first storage region for storing a program or instructions and a second storage region for storing data. The first storage region may store an operating system, an application or instructions required by at least one function (for example, an audio play function or an image play function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DRRAM). The memory 1109 in this embodiment of this application includes but is not limited to these and any other suitable types of memories.

The processor 1110 may include one or more processing units. Optionally, the processor 1110 integrates an application processor and a modem processor. The application processor mainly processes operations related to an operating system, a user interface, an application, and the like. The modem processor mainly processes wireless communication signals, for example, is a baseband processor. It can be understood that the modem processor may alternatively not be integrated in the processor 1110.

The radio frequency unit 1101 is configured to receive a backscatter signal from a backscatter communication BSC device.

The processor 1110 is configured to determine first information based on the backscatter signal, where the first information includes at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time.

The radio frequency unit 1101 is further configured to report the first information.

The terminal 1100 provided in this embodiment of this application is capable of implementing the processes implemented in the method embodiment shown in FIG. 3, with the same technical effect achieved. To avoid repetition, details are not described herein again.

An embodiment of this application further provides a network-side device, including a processor and a communication interface. The communication interface is configured to receive first information from a terminal, where the first information is determined based on a backscatter signal received from a BSC device, the first information includes at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time. The network-side device embodiment corresponds to the foregoing method embodiment for the network-side device, and all implementation processes and implementations of the foregoing method embodiment are applicable to the network-side device embodiment, with the same technical effect achieved.

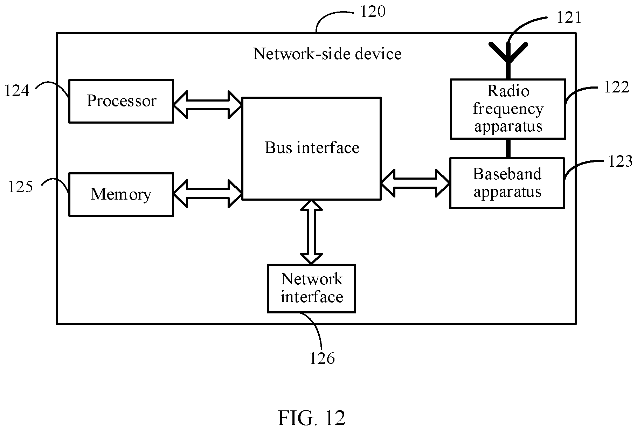

Specifically, an embodiment of this application further provides a network-side device. As shown in FIG. 12, the network-side device 120 includes an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information through the antenna 121, and sends the received information to the baseband apparatus 123 for processing. In a downlink direction, the baseband apparatus 123 processes to-be-sent information, and sends the information to the radio frequency apparatus 122; and the radio frequency apparatus 122 processes the received information and then sends the information through the antenna 121.

The method performed by the network-side device in the foregoing embodiment may be implemented in the baseband apparatus 123, and the baseband apparatus 123 includes a baseband processor.

The baseband apparatus 123 may include, for example, at least one baseband board, where a plurality of chips are disposed on the baseband board. As shown in FIG. 12, one of the chips is, for example, the baseband processor, which is connected to the memory 125 through a bus interface, to invoke a program in the memory 125 to perform the operations of the network device shown in the foregoing method embodiments.

The network-side device may further include a network interface 126. The interface is, for example, a common public radio interface (common public radio interface, CPRI).

Specifically, the network-side device 120 in this embodiment of this application further includes instructions or a program stored in the memory 125 and capable of being executed by the processor 124, and the processor 124 invokes the instructions or program in the memory 125 to perform the method performed by the modules shown in FIG. 9, with the same technical effect achieved. To avoid repetition, details are not described herein again.

An embodiment of this application further provides a readable storage medium. The readable storage medium stores a program or instructions. When the program or instructions are executed by a processor, the processes in the information reporting method embodiment are implemented, or the processes in the information receiving method embodiment are implemented, with the same technical effect achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or a compact disc.

An embodiment of this application further provides a chip. The chip includes a processor and a communication interface. The communication interface is coupled to the processor. The processor is configured to run a program or instructions, to implement the processes in the information reporting method embodiment, or implement the processes in the information receiving method embodiment, with the same technical effect achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes in the information reporting method embodiment, or implement the processes in the information receiving method embodiment, with the same technical effect achieved. To avoid repetition, details are not described herein again.

An embodiment of this application further provides a communication system, including a terminal and a network-side device, where the terminal may be configured to perform the steps in the embodiment of the information reporting method shown in FIG. 3, and the network-side device may be configured to perform the steps in the embodiment of the information receiving method shown in FIG. 7.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, persons skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the related art may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, persons of ordinary skill in the art may further make many modifications without departing from the purposes of this application and the protection scope of the claims, and all the modifications shall fall within the protection scope of this application.

## Claims

1. An information reporting method, comprising:
receiving, by a terminal, a backscatter signal from a backscatter communication BSC device;
determining, by the terminal, first information based on the backscatter signal, wherein the first information comprises at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time; and
reporting, by the terminal, the first information.

2. The method according to claim 1**,** wherein the content of the backscatter signal comprises at least one of the following: control information of the BSC device and data information of the BSC device.

3. The method according to claim 1 or 2, wherein the content of the backscatter signal comprises at least one of the following:
a raw signal waveform, first content, and second content of the backscatter signal, wherein
the first content is content obtained by decoding the backscatter signal, and the second content is content obtained by integrating the first content.

4. The method according to claim 3, wherein the second content comprises at least one of the following:
a first data frame, wherein the first data frame carries the data information of the BSC device; and
a second data frame, wherein the second data frame carries the control information of the BSC device.

5. The method according to claim 1, wherein the target event comprises at least one of the following:
verification on the received backscatter signal fails;
no BSC device responds; or
collision occurs due to simultaneous response by a plurality of BSC devices.

6. The method according to any one of claims 1 to 5, wherein the first information is associated with backscatter signal(s) of one or more BSC devices.

7. The method according to any one of claims 1 to 5, wherein when the terminal does not receive a backscatter signal from a first BSC device, the method further comprises:
padding, by the terminal, pre-agreed-upon information to a first field of the first information, wherein the first field is used to carry information related to the backscatter signal of the first BSC device.

8. The method according to claim 1, wherein the first information is carried in a physical uplink shared channel PUSCH and/or a physical uplink control channel PUCCH.

9. The method according to claim 8, wherein when the first information is carried in the PUSCH and/or the PUCCH, the method further comprises at least one of the following:
generating, by the terminal, an application layer data frame comprising the first information, processing the data frame at an L3 network layer and an L2 data link layer, and then mapping a processed data frame to the PUSCH at an L1 physical layer;
generating, by the terminal, an L3 network layer data frame comprising the first information, processing the data frame at an L2 data link layer, and then mapping a processed data frame to the PUSCH at an L1 physical layer;
generating, by the terminal, an L2 data link layer data frame comprising the first information, and mapping the data frame to the PUSCH at an L1 physical layer;
generating, by the terminal, an L1 physical layer data frame comprising the first information, and using the PUSCH to carry the data frame; or
generating, by the terminal, an L1 physical layer data frame comprising the first information, and using the PUCCH to carry the data frame.

10. The method according to claim 9, wherein the data frame has a fixed length, or the data frame has a variable length.

11. The method according to claim 10, wherein when the data frame has a variable length, the method further comprises at least one of the following:
sending, by the terminal, second indication information to a network-side device, wherein the second indication information is used to explicitly indicate a length of the data frame; or
sending, by the terminal, third indication information to the network-side device, wherein the third indication information is used to implicitly indicate a length of the data frame.

12. The method according to claim 11, wherein the second indication information comprises information carried in a second field of the data frame; and
the third indication information comprises separators inserted at the start and the end of the data frame.

13. The method according to any one of claims 1 to 12, wherein a configuration of the first information is determined based on at least one of the following:
a pre-agreed-upon configuration;
a default configuration;
an indication by the network-side device; or
selection by the terminal.

14. The method according to claim 13, wherein when the configuration of the first information is determined based on the indication by the network-side device, the method further comprises at least one of the following:
receiving, by the terminal, fourth indication information from the network-side device, wherein the fourth indication information is used to indicate the configuration of the first information; or
monitoring, by the terminal, control information sent by the network-side device to the BSC device, and determining the configuration of the first information based on the control information.

15. An information receiving method, comprising:
receiving, by a network-side device, first information from a terminal, wherein
the first information is determined based on a backscatter signal received from a BSC device, the first information comprises at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time.

16. The method according to claim 15, wherein the first information is carried in a PUSCH and/or a PUCCH.

17. The method according to claim 16, wherein the receiving first information comprises at least one of the following:
monitoring, by the network-side device, the PUSCH to obtain an L1 physical layer data frame, processing the L1 physical layer data frame at an L2 data link layer and an L3 network layer to generate an application layer data frame, and obtaining the first information from the application layer data frame;
monitoring, by the network-side device, the PUSCH to obtain an L1 physical layer data frame, processing the L1 physical layer data frame at an L2 data link layer to generate an L3 network layer data frame, and obtaining the first information from the L3 network layer data frame;
monitoring, by the network-side device, the PUSCH to obtain an L1 physical layer data frame, obtaining an L2 data link layer data frame based on the L1 physical layer data frame, and obtaining the first information from the L2 data link layer data frame;
monitoring, by the network-side device, the PUSCH to obtain an L1 physical layer data frame, and obtaining the first information from the L1 physical layer data frame; or
monitoring, by the network-side device, the PUCCH to obtain an L1 physical layer data frame, and obtaining the first information from the L1 physical layer data frame.

18. The method according to claim 17, wherein the data frame has a fixed length, or the data frame has a variable length.

19. The method according to claim 18, wherein when the data frame has a variable length, the method further comprises at least one of the following:
receiving, by the network-side device, second indication information from the terminal, wherein the second indication information is used to explicitly indicate a length of the data frame; or
receiving, by the network-side device, third indication information from the terminal, wherein the third indication information is used to implicitly indicate a length of the data frame.

20. The method according to claim 19, wherein the second indication information comprises information carried in a second field of the data frame; and
the third indication information comprises separators inserted at the start and the end of the data frame.

21. The method according to any one of claims 15 to 20, wherein the method further comprises:
sending, by the network-side device, fourth indication information to the terminal, wherein the fourth indication information is used to indicate a configuration of the first information; and
sending, by the network-side device, control information to the BSC device, wherein the control information is used for the terminal to determine the configuration of the first information based on the control information after detecting the control information.

22. An information reporting apparatus, comprising:
a first receiving module, configured to receive a backscatter signal from a BSC device;
a first determining module, configured to determine first information based on the backscatter signal, wherein the first information comprises at least one of the following: content of the backscatter signal, first indication information, and information of a first event, the first indication information is used to indicate whether a target event occurs when a terminal receives the backscatter signal within first time, and the first event is a target event that occurs when the terminal receives the backscatter signal within the first time; and
a reporting module, configured to report the first information.

23. An information receiving apparatus, comprising:
a third receiving module, configured to receive first information from a terminal, wherein
the first information is determined based on a backscatter signal received from a BSC device, the first information comprises at least one of the following: content of the backscatter signal, first indication information, and information of a first event, the first indication information is used to indicate whether a target event occurs when the terminal receives the backscatter signal within first time, and the first event is a target event that occurs when the terminal receives the backscatter signal within the first time.

24. A terminal, comprising a processor and a memory, wherein the memory stores a program or instructions capable of being executed by the processor, and when the program or instructions are executed by the processor, the steps of the information reporting method according to any one of claims 1 to 14 are implemented.

25. A network-side device, comprising a processor and a memory, wherein the memory stores a program or instructions capable of being executed by the processor, and when the program or instructions are executed by the processor, the steps of the information receiving method according to any one of claims 15 to 21 are implemented.

26. A readable storage medium, wherein the readable storage medium stores a program or instructions, and when the program or instructions are executed by a processor, the steps of the information reporting method according to any one of claims 1 to 14 are implemented, or the steps of the information receiving method according to any one of claims 15 to 21 are implemented.
